# EUROPEAN PATENT SPECIFICATION

(11) **EP 3 998 742 B1**
(45) Date of publication and mention of the grant of the patent: **14.10.2026**
(21) Application number: 20840900.3
(22) Date of filing: 09.06.2020
(51) Int. Cl.: H04L 9/32, G06F 21/30, G06F 21/33, G06F 21/45, G06F 21/64, G06F 21/32, G06F 21/60, G06F 21/62

(54) **SYSTEM TO GENERATE A DIGITAL HANDWRITTEN SIGNATURE USING A MOBILE DEVICE**
SYSTEM ZUR ERZEUGUNG EINER DIGITALEN HANDSCHRIFTLICHEN UNTERSCHRIFT UNTER VERWENDUNG EINES MOBILGERÄTS
SYSTÈME DE GÉNÉRATION D'UNE SIGNATURE AUTOGRAPHE NUMÉRIQUE AU MOYEN D'UN DISPOSITIF MOBILE

(30) Priority: 12.07.2019 MX 2019008404
(43) Date of publication of application: 18.05.2022
(73) Proprietor: Muuk Technologies, S. DE R.L. DE C.V., 53950 Naucalpan de Juarez (MX)
(72) Inventor: CHAVARRIA GUTIERREZ, Carlos Eduardo, Ciudad de Mexico, 06100 (MX)
(74) Representative: Araujo Edo, Mario
(86) International application number: PCT/MX2020/050009
(87) International publication number: WO 2021/010811

(56) References cited:
- EP-A1- 2 169 595
- EP-A1- 3 709 567
- WO-A1-2018/211475
- WO-A1-2019/093573
- US-A- 5 818 955
- US-A1- 2004 236 951
- US-A1- 2014 214 698
- US-A1- 2015 063 562
- US-A1- 2015 199 780
- US-A1- 2016 011 770
- US-A1- 2018 176 017
- HERMOSILLO JUAN JESUS NUNEZ; ALVAREZ OCTAVIO PARRA; RAMIREZ ENRIQUE FLORES; SALAZAR-LINARES PABLO: "Evolution of autograph signature to advanced electronic signature in smart cities environment", IEEE, 2018, XP033524889, Retrieved from the Internet <URL:https://ieeexplore.ieee.org/stamp/stamp.jsp?tp=&arnumber=8656666> [retrieved on 20200921]

## Description

### TECHNICAL FIELD

The present invention belongs to the technical field of communications, specifically to the field of communication of mobile devices in conjunction with computer systems and document security, and more specifically with the signing of documents in digital form and security in communication to ensure the integrity dof the document.

### BACKGROUND

Currently, the development of electronic commerce and the exchange of properties between different sectors of society, makes it necessary to make agreements or close contracts, for which the conventional way is signing paper documents as has been carried out by ancient cultures and has prevailed throughout the years. However, as a consequence of technological evolution, there are known ways to carry out the document signing process, such a way that documents can be signed in a different manner, thereby achieving advantages over the traditional way of signing a document.

Considering the above and observing the state of the art, patent document US 6 839 453 has been found which describes a system and method to authenticate a signature in an originally signed article, which uses at least one camera to capture an image of a person when the article is signed. In one embodiment, the image is a real-time video image, and in another embodiment, the image is a still photo. The images associated with the signed article, so that the owner of the article has a mechanism to authenticate the signature. Preferably, the signed article has a unique identifier located therein, and the image is preferably edited to include that identifier as well. A souvenir kit is also provided, containing an originally signed item, a storage medium that stores a captured image of an original signing event associated with the item. In addition, a captured image and the indicative data of the signed article are stored electronically in association with each other, such as on a storage medium available to a holder of the signed article, or in a database that can be accessed remotely.

Another related document is patent application US 2013050512 A1. This document describes the techniques for signing electronic documents initiated by the signatory using an electronic signature service using a mobile device or other client device. Embodiments for example are providing an electronic signature service ("ESS") configured to facilitate the creation, storage and management of documents and corresponding electronic signatures. In some embodiments, when a signing user receives a hard copy (e.g., a signing document), the signer may capture an image of the signing document with a camera on a mobile device. The signer can import the image captured in the ESS for signature, storage and/or transmission to other parties.

Also, the patent application US 2012284591 A1 describes systems and methods for the electronic identification and signature of electronic documents. Certain embodiments of the present invention provide a virtual signature tool for creating a unique and verifiable electronic signature (SigCode) to sign documents using an individual's mobile device. In some embodiments, document identifiers (e.g., QR codes) can be used to identify and retrieve documents for the digital signature. For example, by scanning another document identifier, an electronic version of the document (for example, an exemption) can be retrieved from a server. The electronic document can be displayed on the user's mobile device (for example, using a web page). Then, the user can review the electronic document, complete the required information, and sign the document with an electronic signature generated by the electronic signature tool.

Another document is patent application US 2012093409 A1 which describes computer readable systems, methods and means for capturing a signature and placing a representation of the captured signature in the appropriate field of a document. A camera or other appropriate sensor can capture an image of a signature provided by a user on paper. The signature can be digitized to create a representation that a device can use in a displayed document. To determine where to place the representation, a horizontal line of a document can be identified by selectively representing portions of the document adjacent to an input position and identifying one or more limits for a detected horizontal line. The representation can be scaled to fit a detected field in the document.

US 8780383 B2, describes a fax document that can be uploaded to a fax server on a vPBX network or dynamically generated. For dynamic generation, preconfigured templates can be stored on a mobile device or on a fax server. A user can use a mobile device connected to a vPBX network as a control device to direct the generation of faxes on a fax server. Fax generation can be customized based on the geographic location of the mobile device. The generated fax can be downloaded to a mobile device. The user can digitally sign the fax using a touch screen input device on the mobile device. The digitally signed fax can be transmitted to a destination device.

Patent application US 2005166053 A1 describes a method, apparatus and system that are aimed at associating the signature of a device with a mobile device. The invention is configured to determine at least one level of confidence associated with the mobile device and an associated carrier gateway. In one embodiment, the mobile device may have multiple levels of trust associated with it. A confidence level can be determined based on whether the mobile device provides a device identifier. Another level of trust can be determined based on whether the mobile device is configured to receive a cookie. A third confidence level can still be determined based on a dynamic session identifier. The confidence level can also be determined based, in part, on a confidence associated with the operator gateway.

US Patent 8056822 B2 describes a method for certifying and subsequently authenticating original physical or digital documents. The concept of evidence is based on the dual nature of a physical information element and a digital information element, one of which is the reference for the other that cannot be modified with the risk of losing the evidence. For a physical original document (8) associated with a bubble seal (7), there is a proprietary paperless reference counterpart with corresponding date and time. For a patented original digital document, time-stamped (15), there is a corresponding reference counterpart in the form of a bubble seal (7)

US Patent 6839453 B1, which describes a method and system for providing owners, potential buyers, and other users of handwritten signed items, such as sporting goods and other entertainment memorabilia, with visual evidence to verify the authenticity of the handwritten signature. A method of the present invention involves capturing an image of the signature when placed on the article. The image thus captured is stored on a computer readable medium. In addition to the item itself, the item owner may be provided with a computer-readable medium containing computer-readable instruction for accessing the image and other information about the item, the signing process, the handwritten signature, etc. The image can be captured by a camera mounted on a pen or other writing instrument.

The technology that is currently available allows modifying the traditional way of signing by hand to close agreements or contracts, in such a way that, by making use of mobile devices and of communication networks, the present invention overcomes the problem of being able to provide the handwritten signature directly on the mobile device, such that the integrity of the signed document can be guaranteed.

Methods related to the generation of a digital handwritten signature are known from WO 2018/211475 A1, WO 2019/093573 A1 and EP 2 169 595 A1.

### OBJECT OF THE INVENTION

An aim of the present invention is to provide a security system that allows providing a digital handwritten signature. This new digital handwritten signature prevents theft of the identity of the signer by means of an interface located in a mobile device wherein, when a user wants to provide a digital handwritten signature, they can do so using such interface. The interface triggers the activation of the video camera and takes a video of the moment in which the signature is being made on the same mobile device, wherein a field is enabled in the mobile device by the interface, which is displayed on the screen where the user can trace his signature, which remains embedded in the video. When processing the data, the document is generated as a PDF in which the user's signature is incorporated as if the user had actually signed directly on paper. To guarantee the integrity of this process, different stages or steps are carried out for maintaining security of information.

Another aim is to implement a method, which is carried out by means of a mobile device, and which is responsible for activating an interface on the mobile device so that a user can provide a digital handwritten signature and obtain a PDF document with the handwritten signature. The method activates an interface on the mobile device to provide the signature on the mobile device, wherien the necessary steps for guaranteeing security of the information are implemented.

A further aim is that of a computer-readable medium storing the steps of a method for a user to provide a digital handwritten signature on a mobile device. The method activates an interface on the mobile device allowing the user to provide their signature and the mobile device registers said signature while taking a video of the user signing, so that, at the end of the process, the user can have the signed document in PDF format. This is done incorporating security stages or steps to preserve the integrity of the process.

### BRIEF DESCRIPTION OF THE INVENTION

The present invention refers to a method for use in a system to generate a digital handwritten signature (DHS) according to claim 1, to a system for generating a digital handwritten signature according to claim 5 and to a computer-readable medium according to claim 9 containing such method. Preferred embodiments of the invention are defined in the dependent claims.

The present invention describes a system according to claim 5 to generate digital handwritten signatures (DHS) by means of a mobile device. The system comprises different components which, when integrated, allow obtaining a document with the handwritten signature. The system comprises an interface that is incorporated in a mobile device. By means of the interface incorporated in the mobile device, the user can obtain the document they want to sign. This is done by means of a QR code or link that is received by means of a message on the mobile device.

When the user decides to sign the document obtained by the QR code or the link, the interface on the mobile device displays a field in it so that the user can provide the signature with their finger. Meanwhile, the interface activates the camera of the mobile device and the image of the user is seen on the screen. Thereby, two videos are generated, one of the image of the user providing his signature on the screen of the mobile device, and another video of the user reading the conditions of the signature. With the videos obtained in this way, the security process is integrated, for which purpose the interface of the digital handwritten signature encrypts and sends the data to the servers of the institutions that are part of the security check and also of the institution that generates the document. Additionally, the digital handwritten signature system adds two security mechanisms and sends copies of the signed document to the parties.

Further, a method according to claim 1 is described herein in a system for generating digital handwritten signatures on a mobile device, whereby the method comprises incorporating an interface in a mobile device; obtaining a document to be signed by means of a QR code or a link, which is received by means of an MMS message in the mobile device, providing a signature, by a user, by means of the mobile device, on the screen of the mobile device for later processing of the signature. The digital handwritten signature interface encrypts the information, sending it to the computer servers of the institutions that are part of the system's security, and as a security measure, all the information that was processed in the device is cancelled. Finally, the digital handwritten signature system adds two additional security mechanisms to the file and also sends a copy of the signed document to the parties.

Additionally, a computer-readable medium according to claim 9 is described, which contains steps to incorporate the interface into a mobile device, to subsequently obtain a document to be signed either by means of a QR code or of a link obtained from an SMS message to the mobile device, to subsequently activate the interface of the mobile device and make two videos of the user tracing their signature on the screen of the mobile device and of the reading of the content of the signed document, for example, of the mobile device. Thereby, it is possible to send by means of the mobile device and according to the indications of the digital autonomous signature system, wherein the information is encrypted and sent to the servers for validation and conservation, while any content is deleted from the mobile device.

### BRIEF DESCRIPTION OF THE FIGURES

**Figure 1****.** Shows a general flow diagram of the system.
**Figure 2****.** Shows a flow diagram corresponding to obtaining the information.
**Figure 3****.** Shows a flow chart of how to obtain the document to be signed according to an embodiment.
**Figure 4****.** Shows a flow diagram of the process to obtain the identity of the user.
**Figure 5****.** Shows a flow diagram of how to identify the user.
**Figure 6****.** Shows a flow diagram of how to obtain the videos of the signature.
**Figure 7****.** Shows a flow diagram of how to show the document to be signed.
**Figure 8****.** Shows a flow chart of how to provide a handwritten signature.
**Figure 9****.** Shows a flow diagram of how to create the file of the signature.
**Figure 10****.** Shows a flow chart of how to validate information.
**Figure 11****.** Shows a flowchart of how to validate the integrity of the signature.
**Figure 12****.** Shows a flow chart of how to compare the information of the obtained files.
**Figure 13****.** Shows a flow diagram of how to certify the signature and distribute the document.
**Figure 14****.** Shows a schematic diagram of the system.

### DESCRIPTION OF THE INVENTION

Reference will now be made to details of the exemplary embodiments, which are illustrated in the accompanying drawings. The implementations that are described of the exemplary embodiments do not represent all the implementations contained in the present description, these are simply examples of apparatus and methods consistent with aspects related to the present description as indicated in the appended claims. The terminologies used in this specification are only to describe particular embodiments, but not to limit the present description.

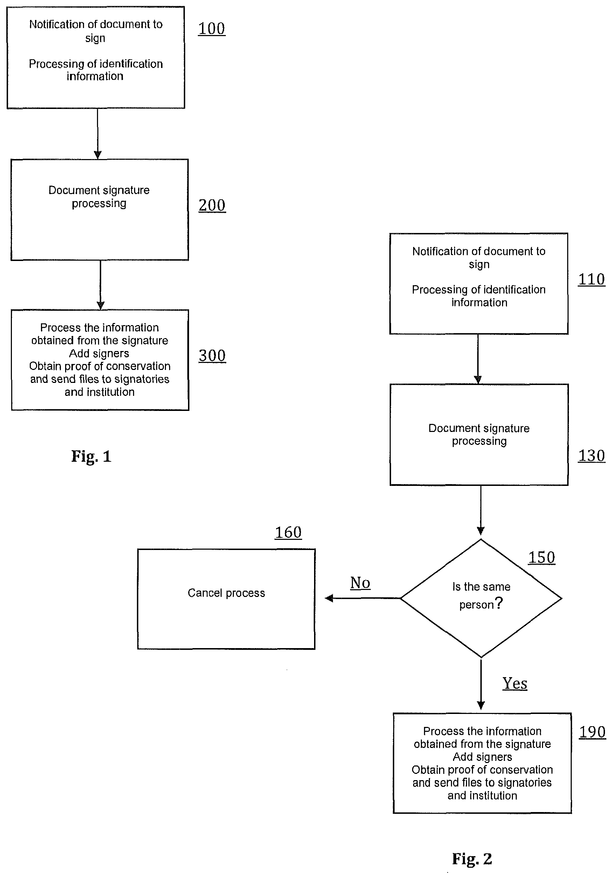

Figure 1 shows the flow diagram of the method to perform the digital handwritten signature. The method is implemented on a mobile device of a user who is interested in digitally signing a document. This is achieved by means of an interface and is carried out in step (100), where a verification is made as to whether the interface is available on the mobile device. In the event that the interface is available, then a notification can be received to sign a document. Once it is confirmed that it is wished t provide a digital handwritten signature is desired, then the identification information is processed.

Subsequently, in step (200), the processing of the digital handwritten signature is carried out. The handwritten signature is provided with the user's finger and, in addition, a video of the moment in which the signature is provided on the screen of the mobile device is made, as one of the security measures. A further video is made in which the user's reading of the document they have signed is recorded, which defines part of the security of the signing of the document.

In step (300), the final part of the process is carried out, in which the data that was obtained using the mobile device is sent to the servers that guarantee the authenticity of the signature. Thus, in this step, the information obtained is processed and it is verified if there other additional persons must sign the document. In the event that further perspns must sign, then these signatures are made. Subsequently, two additional security mechanisms are added by adding a Hash and a Timestamp to the generated files, proofs of conservation are obtained. The files are sent to the signing user and to the institution to which it is signed, wherein such institutions can be among others FinTech companies; banks, wherein it is ideal for origination, acquisition and allocation processes. With this digital handwritten signature, it is possible to sign: contracts, instructions, orders, payments, or applications among other documents. Other possible institutions are insurances, wherein it applies to any type of insurance, and allows signing applications, claims, reimbursements, provider services and more. Other possible institutions are customs and foreign trade agencies; marketers; lessors; as well as companies with needs for legal certainty in mobile and virtual environments, such as trading houses, where contracts, instructions, orders, requests, withdrawals, etc. can be signed.

Figure 2 shows the flow chart corresponding to obtaining the information from step (100) of Figure 1, wherein, in step (110), a notification is provided to the user of the mobile device that has they have a document waiting to receive the digital handwritten signature. Upon acceptance, step (130) is performed, in which the processing of the personal information of the user is carried out to determine if is the user is the person who should sign the document. For this purpose, it is determined in step (150) if the person in possession of the mobile device is the same person who must provide the digital handwritten signature. If the result of this determination is that it is not the same person, then the process is canceled. However, in the event that it is determined that it is the same person, then the information is validated and stage 200 og figure 1is carried out.

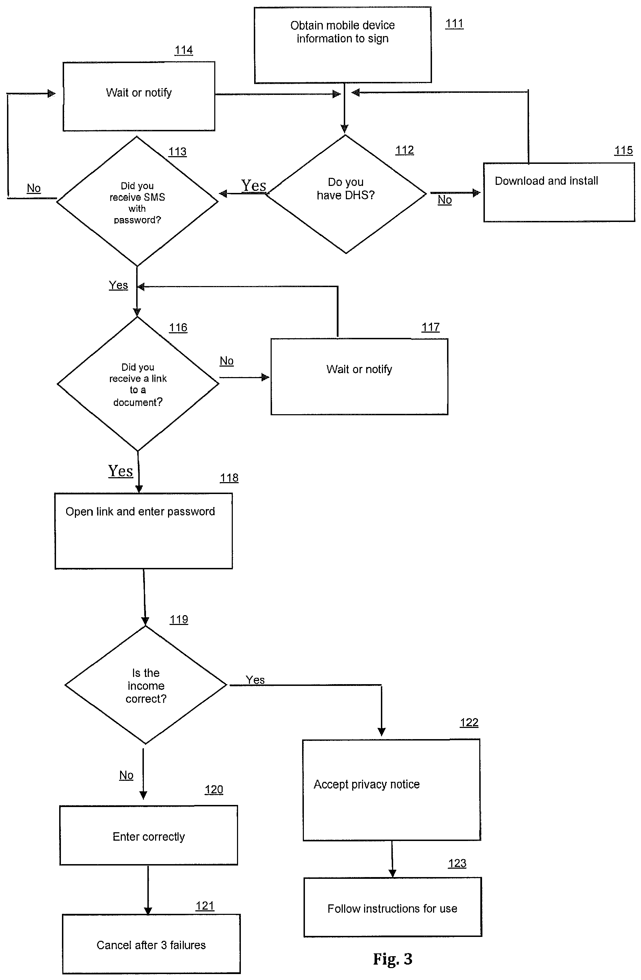

Figure 3 shows an embodiment of the flow chart of how the user of the mobile device can obtain the document to be signed, wherein, in step (111), information is obtained from the mobile device in order to determine that the interface to carry out the digital handwritten signature is performed properly, so in step (112) it is determined whether the interface is available in the device mobile device to perform the digital handwritten signature. In the event that said interface is not available, then step (115) is performed, in which the interface is downloaded and installed.

If said interface is available in the mobile device, then in step (112), it is determined that, if the interface is available, step (113) is performed, where it is determined whether an SMS-type message has been received with the key to obtain the document to be signed. If it is determined that the message is not available, then step (114) is carried out, in which the SMS-type message is awaited or notified. If it is determined in step (113) that the message is present, then in step (116) it is determined if a link to a document has been received, in order to verify whether the user already has the document to be signed. If the document is not available, then in step (117), a waiting time is left to verify whether within that time the link to the expected document is obtained or a notification is produced to inform that said document has not been received, to then return to step (116), where in the event that there is a link to the document to be signed, then step (118) is carried out.

In step (118), the user can have access to the expected document using the mobile device. For that purpose, the user opens the received link and enters the access key to have the document on the mobile device. Once step (118) has been made, it is determined, in step (119), whether the entry is correct. If the entry is not correct, step (120) is carried out, in which it is possible to attempt to capture the data again so that they can be correctly entered. If, for some reason, the entry could not be made properly, step (121) is performed, where the process is canceled after three attempts to obtain the document to sign. In the event that in step (119) it is determined that the entry has been correct, then step (122) is performed, in which the user accepts the privacy notice, and later in step (123) the interface displays a series of instructions that the user must follow in order to use the interface and perform the digital handwritten signature.

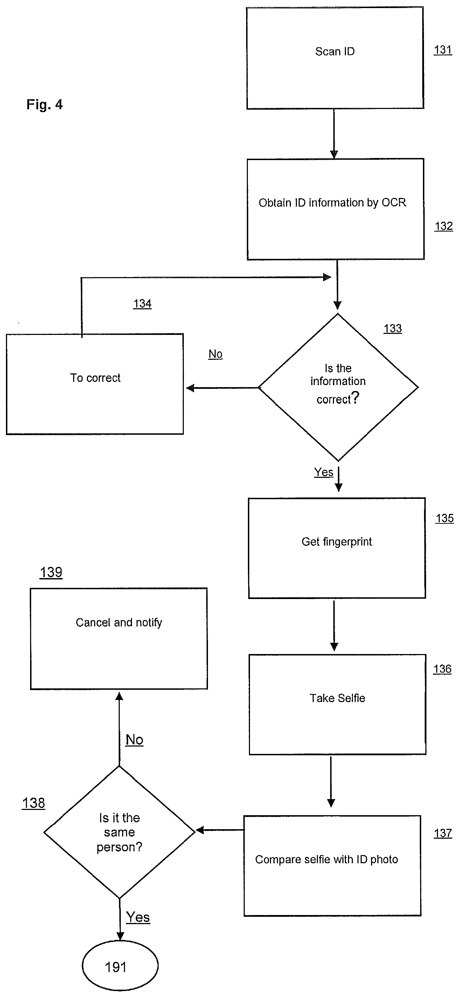

Figure 4 shows a flow diagram of the process to obtain the identity of the user who wants to sign the document. This is a security measure to prevent spoofing and to prevent a third person from signing on behalf of the interested party. After performing step (123) (of figure 3), step (131) is performed in which the user is requested to use the mobile device, when using the interface for digital handwritten signature, to scan their photo identification (ID), which could be for example an INE credential (personal identification issued by Mexican national electoral institution). Once the step of scanning the user ID has been performed, then step (132) is performed, in which the interface of the DHS obtains the user ID information, which was processed by means of character recognition (OCR), in order to be able to determine, in step (133), if the information is correct. If the information is not correct, then it returns to step (133), passing through step (134) where the information is corrected, in order to determine whether the information is correct. This is to scan again the ID of the user.

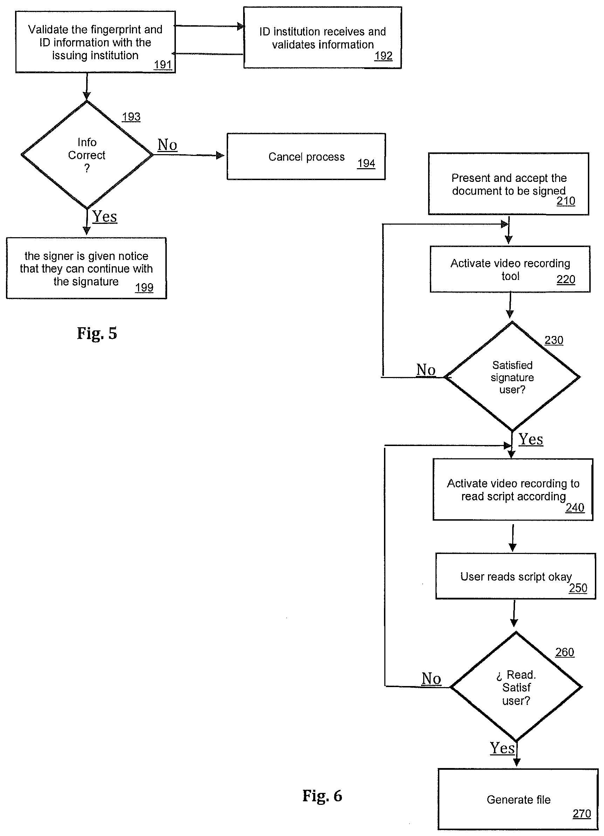

When the information is determined to be correct, then step (135) is carried out. In this step, the user's fingerprint is obtained through the interface on the mobile device. In step (136), the user is requested to take a selfie, in order to identify if the user is actually the same person as the person of the ID that was scanned in step (131). Thereby, security is provided to the process of identification to to provide the digital handwritten signature of the document. Finally, in step (137), a comparison is made of the selfie that has just been obtained with the photograph of the user ID document obtained in step (131). Finally, in the step (138), it is determined if the person who has been identified by means of the selfie is the same person as that of the ID document. In the event that it is not the same person, then step (139) is performed, where the process is cancelled and it is warned that the person is not the same person. If the person is the same person, then the process continues to step (191) of figure 5, such that by the processing of this information, step (150) of the figure 2 is carried out.

Figure 5 shows a flow diagram with which the user who intends to sign the document is identified, which is performed by determining, in step (150) of Figure 2, that the person who wants to sign the document is the same person identified with the provided ID. When it is determined, in (150), that it is the same person, then step (191) is carried out, where a validation of the fingerprint and the ID information of the user with the issuing institution is performed, for which the mobile device establishes a communication to a server of said institution, whereby the ID institution receives said information provided by the mobile device and validates it. This is carried out in step (192).

Once the institution that issued the user ID validates the information, it returns it to the mobile device in which, through the interface, step (193) is performed, in which it is determined that said information is correct. If the information is not correct, then the process is canceled in step (194). On the other hand, if the information is correct, then step 195 is carried out, in which the signing user is notified that they can continue with the signature.

Once the validation of the information of the signing user has been carried out, then the process to sign the document is carried out. Figure 6 shows a flow chart for providing the signature of the document, in which the videos of the moment of signing are incorporated. Step (210) shows the step in which the steps to follow to provide the signature and the document to be signed are presented to the user by means of the DHS interface. Subsequently, in step (220), a tool of the mobile device is activated to make a video recording. Then, in step (230), it is determined if the user is satisfied with the signature made. In case the user is not satisfied, then they return to step (220) to repeat the process. If (230) the user is satisfied, then in step (240), the video recording tool is activated again and the user is requested to stand in front of the screen while a text is shown to the user that the user must read loud and clear. The text read commits the user to comply with the agreement they are acquiring in the document (agreement script). In step (250), the user reads the text of the agreement script while the interface captures the video corresponding to said reading. Once the reading is done, step (260) determines if the user is satisfied with the recorded video. In case the user is not satisfied, then they return to step (240) to repeat the process again. If the user is satisfied, after determination in step (260), then step (270) is performed, which is where the DHS interface performs the process of generating the corresponding files.

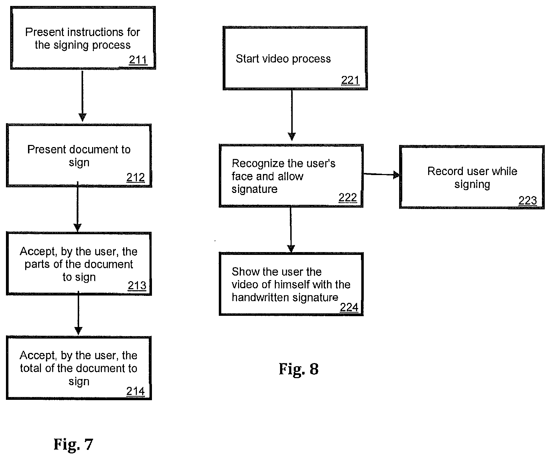

Figure 7 shows a flow chart by means of which steps are carried out to show the document to be signed. Step (211) is carried out when carrying out step (210) of figure 6. Thus, step (211) is generated from the result of step (195) of figure 5, in which the user was notified, by means of the interface, that he could perform the signature. Then in step (211), the user is presented with the steps that are to be carried out to provide the digital handwritten signature on the desired document. Once the user knows the steps to be performed, then step (212) takes place, wherein the document to sign is presented to the user. Subsequently, in step (213), parts of the document to be signed are shown, which the user accepts by clicking the DHS interface on the sections where his signature is required. Finally in step, (214) the user accepts the entire document to be signed by clicking at the end of the document.

At the end of step (214), the process proceeds to step (220) of figure 6. When performing step (220), which in figure 8 shows the steps corresponding to the process of activating a tool for video recording. Thus, after performing step (214) of figure 7, step (221) of figure 8 is carried out, where the process of video recording tool is started, with which the videos are to be taken for the corresponding signature of the document to be signed. Once the video process has started, step 222 is performed, in which the user is requested to stand in front of the screen of the mobile device to recognize the face of the user. When the face has been identified, then the DHS interface allows the user to provide his handwritten signature as that of the ID document that was presented in (131) of figure 4. While the user provides his handwritten signature on the screen, the mobile device records, in step (223), the user in video while signing on the screen of the mobile device. Thus, after finishing the signature, the interface shows the user the video of himself with the handwritten signature on the mobile device, which is carried out in step (224), in order to continue with step (230) of figure 6.

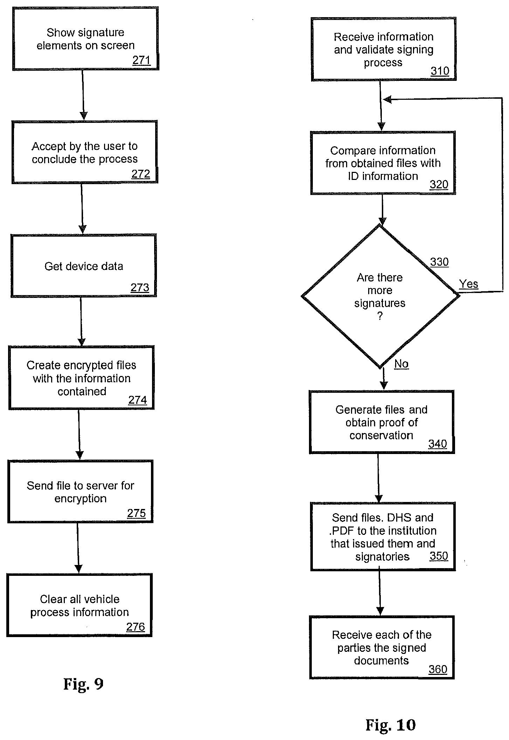

Figure 9 shows the flow chart of how to create the necessary files of the digital handwritten signature (DHS) which is performed when it is determined that the user is satisfied with the text video read from step (260) of figure 6. Step (271) begins then, The elements of the signature are shown to the user via the interface on the mobile device, comprising the digital signature, digital video signature and voice video signature, so that subsequently the user in step (272) agrees to complete the process.

Once the user has agreed to complete the process, then, in step (273), the following data : is obtained from the mobile device; geolocation; UID; date; hour; Device Name; brand; model; and interface version, in order to carry out step (274), in which encrypted files with extension .DHS1 containing all the information of the signed document are generated. Subsequently, in step (275), the .DHS1-file is sent to a "Back-end DHS" server where the information processing is carried out. Later, in step (276), all the information generated during the process of digital handwritten signature is deleted from the mobile device.

Figure 10 shows a flow chart of how the information validation process is performed, corresponding to the process carried out in step (300) of Figure 1. From step (275) of figure 9, step (310) is carried out, in which the information is received and the signature process is validated. Step (320) is subsequently carried out, wherein the information obtained from the files that were generated is compared with the information of the user ID occupied in step (131) of figure 4. After the data is compared, step (330) is carried out, wherein it is determined if more persons are to sign the document. If more persons are to sign the document, the process is repeated from step (320) until all the signatories have signed. If no more persons are to sign the document, then step (340) is carried out, which is where the corresponding files are generated and the preservation certificate is obtained. Subsequently, step (350) is carried out, in which the .DHS and .PDF files are sent to the institution that issued them as well as to each of the signatories, to subsequently carry out the step (360) in which the institution that issued the document to be signed, as well as each of the signatories, receive a copy of the signed document in .DHS and .PDF format. The purpose of this is that said documents are safeguarded and can later be consulted. These documents are sent to the signatories by certified email, while the institution receives them in its infrastructure.

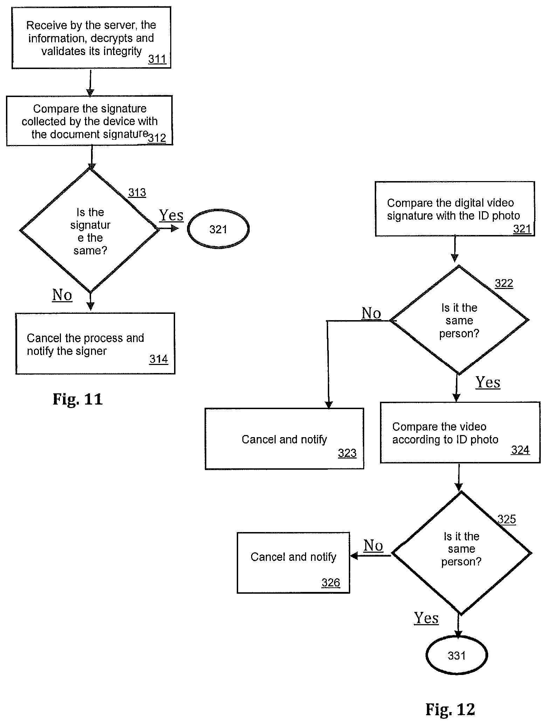

Figure 11 shows a flowchart to validate the integrity of the signature, corresponding to step (310) of figure 10. From step (195) (of figure 5), step (311) is performed, in which the information generated is received by the "Back-end DHS" server, it is decrypted and subsequently the integrity of the information is validated. When finished, the signature collected by the device is compared with the signature in the ID document of the signer. Once said information is compared, then it is determined if the signature is the same in step (312). If the signature is not the same signature, then step (314) is carried out, in which the process is canceled and the signer is notified.

Figure 12 shows a flow chart for comparing the information of obtained files. Once it is determined, in step (313) of figure 11, if the signature is the same, then, in step (321), a random piece of the digital signature video frame is compared by means of facial biometrics with the ID photograph of the user to determine, in (322), if it is the same person. If it is not the same person, then the process is cancelled in step (323) and the signer is notified. If it is determined in (322) that the signer is the same person, then the video agreement with ID photo is compared by facial biometry in step (324), a random frame of the video signature by voice with the photograph in the ID, so that, with this information, a second determination is made in step (325) to identify if it is the same person who is signing. In the event that it is not the same person, then in the process is canceled step (326) and the signer is notified.

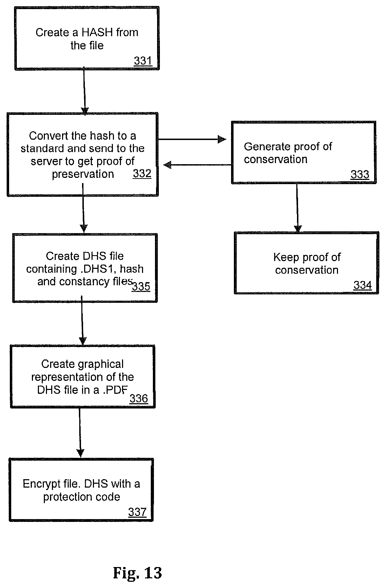

Figure 13 shows a flow chart of how to certify the signature and distribute the document. This process is carried out from the process of step (330) of figure 10. After step (325) of figure 12, step (331) is carried out, in which a unique and unrepeatable HASH of the file is created, wherein subsequently, in step (332), the HASH obtained becomes an ASN.1 standard, which is sent to a third party server, which is a server of a certifying institution, so in step (333) the certified institution generates a proof of preservation, and in step (334), the proof of certification is saved in a database of the certified institution. When the certified institution returns the corresponding information, in step (335), with the DHS1 file, the HASH and the proof of preservation, a file with a unique name of DHS extension is created. Once the .DHS file is obtained, in step (336) a .PDF file is created, which is a graphical representation of the .DHS file. In step (337), the .DHS file is encrypted to increase the security Such encryption is done with AES (256) and with the .PDF file, which is protected with a security code.

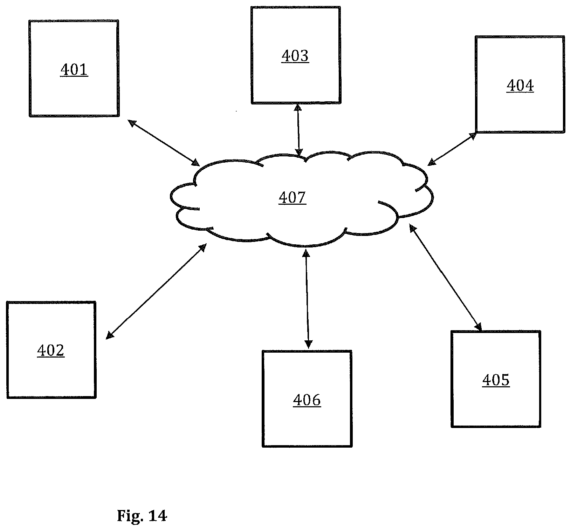

Figure 14 shows a schematic diagram of the system (400), and shows the integration of the system, which, as can be seen, comprises the mobile device (402), which is the user device on which the digital handwritten signature (DHS) is to be provides by means of the interface present in the device (402). An administration server (401) is responsible for managing the operation of the system. An end user port (403) is shown. The system has additional servers which are responsible for validating and certifying the process. A back-end server (404) is observed where part of the information is going to be processed. There is also an ID document issuer server wherein, at a given time, the mobile device sends the information to this server for the validation of the information of the data of the identification document of the user and, when the information is returned to the mobile device (402), the mobile device (402) continues with the process. Thus, in the end the information is sent with a third server, where a process is carried out to obtain a record of conservation, and the third server in turn saves the information in a database. The system is configured to work according to the implementation of the method that is developed to perform the digital handwritten signature.

Likewise, and in accordance with the method described in detail in this specification, a computer-readable medium is developed which contains the method already mentioned and illustrated in the figures accompanying this description.

## Claims

1. A method for use in a system to generate a digital handwritten signature, DHS, wherein the method comprises performing the steps of:
notifying a user, by means of an interface of a mobile device, that there is a document to which, upon acceptance, a digital handwritten signature is to be incorporated;
scanning, by means of the interface of the mobile device, an identification document of the user who is to sign;
determining, by means of the interface of the mobile device, whether information of the scanned identification document is correct;
obtaining, by means of the interface of the mobile device, a fingerprint of the user who is to sign;
taking, by means of the interface of the mobile device, a selfie of the user who is to sign as proof of life;
comparing, by means of the interface of the mobile device, the selfie with a photograph of the identification document of the user who is to sign, to verify that the selfie and the identification document correspond to the same person and to prevent a third person from signing on behalf of the user;
sending, by means of the mobile device, to a server of an issuer institution of the identification document, the information of the scanned identification document and the fingerprint to validate the information provided by the user;
obtaining, by means of the interface of the mobile device, the document to be signed, and activating a tool to videorecord the signing of the handwritten signature of the user on the screen of the mobile device and to videorecord the reading of the text with which the user commits to comply with the agreement that is being acquired;
displaying, by means of the interface of the mobile device, the handwritten signature and a videorecording of said signing and of said reading on the screen of the mobile device;
creating, by the interface of the mobile device, encrypted files containing information about the signed document and sending said information to a DHS Back-end server;
comparing, by means of the Back-end DHS server, information about the signed document contained in the encrypted files with the information of the identification document of the user;
comparing, by means of the Back-end DHS server, using facial biometrics, if the user and a photograph of the identification document correspond to the same person;
creating, by means of the Back-end DHS server, a joined hash of the encrypted files and converting said hash into an ASN.1 standard and sending to a third server to obtain a certification proof, wherein the third server stores a copy of the certification proof in a database;
creating, by means of the DHS Back-end server, a file with a unique name of DHS extension and later, based on the file with the DHS extension, a file with a .PDF extension, wherein the DHS file is encrypted and the .PDF file is protected with a security code;
sending the DHS and .PDF files using the DHS Back-end server to an issuer institution thereof and to the user.

2. The method of claim 1, further **characterized by** the step of canceling the process by the interface of the mobile device, when, after notifying the user about the document to which the handwritten signature is to be incorporated, the user fails three times when attempting to login.

3. The method of claim 1, further **characterized by** the step of canceling the process by the interface of the mobile device and of warning, when in the step of comparing the selfie with the photograph of the identification document of the user it is determined that the person in the selfie is not the same person as the person in the identification document.

4. The method of claim 1, further **characterized by** the step of canceling the process by the interface of the mobile device, when the information with the issuer institution of the identification document is not correct, and of otherwise advising the signer to proceed with the handwritten signature.

5. A system for generating a digital handwritten signature, DHS, comprising a mobile device; an identification document issuer institution server ; a back-end DHS server; and a third server issuing a conservation certificate; **characterized in that** the mobile device is configured by means of an interface to:
notify a user that there is a document to which, upon acceptance, a digital handwritten signature is to be incorporated;
scan an identification document of the user who is to sign;
determine if information of the scanned identification document is correct;
obtain a fingerprint of the user who is to sign;
take a selfie of the user who is to sign as proof of life;
compare the selfie with a photograph of the identification document of the user who is to sign to verify that the selfie and the identification document correspond to the same person to prevent a third person from signing on behalf of the user;
send to a server of an issuer institution of the identification document, the information of the scanned identification document and the fingerprint,
obtain the document to be signed, and activate a tool to videorecord the signing of the handwritten signature of the user on the screen of the mobile device and to videorecord the reading of the text with which the user commits to comply with the agreement that is being acquired;
display the handwritten signature, as well as a videorecording of said signing and of said reading on the screen of the mobile device;
create encrypted files containing information about the signed document and send said information to a DHS back-end server;
wherein the Back-end DHS server is configured to:
compare the information contained in the encrypted files with the information in the identification document of the user;
compare, using facial biometrics, if the user and a photograph of the identification document correspond to the same person;
create a joined hash of the encrypted files and convert said hash into an ASN.1 standard to send it to a third server to obtain a certification proof, wherein the third server stores a copy of the certification proof in a database;
create a file with a unique name with DHS extension . and later, on the basis of the file with extension .DHS, a file with extension .PDF, wherein the .DHS file is encrypted and the .PDF file is protected with a security code;
send the. DHS and .PDF files to an issuer institution thereof and to the user.

6. The system of claim 1, further **characterized in that** the mobile device, by means of the interface, cancels the process, when, after notifying the user about the document to which the handwritten signature is to be incorporated, the user fails three times when attempting to login.

7. The system of claim 1, further **characterized in that** the mobile device, by means of the interface, cancels the process and warns when, in the step of comparing the selfie with the photograph of the identification document of the user, it is determined that the person in the selfie is not the same person as the person in the identification document.

8. The system of claim 1, further **characterized in that** the mobile device, by means of the interface, cancels the process, when the information with the issuer institution of the identification document is not correct, and otherwise advises the signer to proceed with the handwritten signature.

9. A computer-readable medium containing a method to generate a digital handwritten signature, DHS, that is performed in a system, **characterized by** performing the steps of:
notifying a user that there is a document to which, upon acceptance, a digital handwritten signature it is to be incorporated;
scan an identification document of the user who is to sign;
determine if information of the scanned identification document is correct;
obtain, by the interface of the mobile device, a fingerprint of the user who is to sign;
take a selfie of the user who is to sign as proof of life;
compare the selfie with a photograph of the identification document of the user who is to sign to verify that the selfie and the identification document correspond to the same person to prevent a third person from signing on behalf of the user;
send to a server of an issuer institution of the identification document, the information of the scanned identification document and the fingerprint;
obtain the document to sign, and activate a tool to videorecord the signing of the handwritten signature of the user on the screen of the mobile device and to video record the reading of the text with which the user commits to comply the agreement that is being acquired;
display the handwritten signature as well as a videorecording of said signing and of said reading on the screen of the mobile device;
create encrypted files containing information about the signed document and send said information to a DHS back-end server;
compare the information about the signed document contained in the encrypted files with the information in the identification document of the user;
compare, using facial biometrics, if the user and a photograph of the identification document correspond to the same person;
create a joined hash of the encrypted files and convert said hash into an ASN.1 standard to send it to a third server to obtain a certification proof, wherein the third server stores a copy of the certification proof in a database;
create a file with a unique name with .DHS extension and later, on the basis of the file with .DHS extension, a file with.PDF extension , wherein the .DHS file is encrypted and the .PDF file is protected with a security code;
send the DHS and .PDF files to an issuer institution thereof them and to the user.

## Patentansprüche

1. Verfahren zur Verwendung in einem System zum Erzeugen einer digitalen handschriftlichen Signatur, DHS, wobei das Verfahren das Durchführen der folgenden Schritte umfasst:
Benachrichtigen eines Benutzers mittels einer Schnittstelle einer mobilen Vorrichtung, dass es ein Dokument gibt, in das bei Annahme eine digitale handschriftliche Signatur aufgenommen werden soll;
Scannen eines Identifikationsdokuments des Benutzers, der signieren soll, mittels der Schnittstelle der mobilen Vorrichtung;
Bestimmen mittels der Schnittstelle der mobilen Vorrichtung, ob Informationen des gescannten Identifikationsdokuments korrekt sind;
Erhalten eines Fingerabdrucks des Benutzers, der signieren soll, mittels der Schnittstelle der mobilen Vorrichtung;
Nehmen eines Selfies des Benutzers, der signieren soll, als Lebensbeweis mittels der Schnittstelle der mobilen Vorrichtung;
Vergleichen des Selfies mit einem Foto des Identifikationsdokuments des Benutzers, der signieren soll, mittels der Schnittstelle der mobilen Vorrichtung, um zu verifizieren, dass das Selfie und das Identifikationsdokument derselben Person entsprechen, und um zu verhindern, dass eine dritte Person im Namen des Benutzers signiert;
Senden der Informationen des gescannten Identifikationsdokuments und des Fingerabdrucks mittels der mobilen Vorrichtung an einen Server einer Ausstellerinstitution des Identifikationsdokuments, um die vom Benutzer bereitgestellten Informationen zu validieren;
Erhalten des zu signierenden Dokuments mittels der Schnittstelle der mobilen Vorrichtung und Aktivieren eines Werkzeugs, um die Signatur der handschriftlichen Signatur des Benutzers auf dem Bildschirm der mobilen Vorrichtung videoaufzuzeichnen und das Lesen des Texts, mit dem sich der Benutzer verpflichtet, die Vereinbarung zu erfüllen, die erworben wird, videoaufzuzeichnen;
Anzeigen der handschriftlichen Signatur und einer Videoaufzeichnung der Signatur und des Lesens auf dem Bildschirm der mobilen Vorrichtung mittels der Schnittstelle der mobilen Vorrichtung;
Erzeugen verschlüsselter Dateien, die Informationen über das signierte Dokument enthalten, durch die Schnittstelle der mobilen Vorrichtung und Senden der Informationen an einen DHS-Backend-Server;
Vergleichen von Informationen über das signierte Dokument, die in den verschlüsselten Dateien enthalten sind, mit den Informationen des Identifikationsdokuments des Benutzers mittels des Backend-DHS-Servers;
Vergleichen mittels des Backend-DHS-Servers unter Verwendung von Gesichtsbiometrie, wenn der Benutzer und ein Foto des Identifikationsdokuments derselben Person entsprechen;
Erzeugen eines verbundenen Hashs der verschlüsselten Dateien mittels des Backend-DHS-Servers und Umwandeln des Hashs in einen ASN.1-Standard und Senden an einen dritten Server, um einen Zertifizierungsnachweis zu erhalten, wobei der dritte Server eine Kopie des Zertifizierungsnachweises in einer Datenbank speichert;
Erzeugen einer Datei mit einem eindeutigen Namen der DHS-Erweiterung und später, basierend auf der Datei mit der DHS-Erweiterung, einer Datei mit einer .PDF-Erweiterung mittels des DHS-Backend-Servers, wobei die DHS-Datei verschlüsselt ist und die .PDF-Datei mit einem Sicherheitscode geschützt ist;
Senden der DHS- und .PDF-Dateien unter Verwendung des DHS-Backend-Servers an eine Ausstellerinstitution davon und an den Benutzer.

2. Verfahren nach Anspruch 1, ferner **gekennzeichnet durch** den Schritt des Abbrechens des Prozesses durch die Schnittstelle der mobilen Vorrichtung, wenn der Benutzer nach dem Benachrichtigen des Benutzers über das Dokument, in das die handschriftliche Signatur aufgenommen werden soll, dreimal versagt, wenn er versucht, sich anzumelden.

3. Verfahren nach Anspruch 1, ferner **gekennzeichnet durch** den Schritt des Abbrechens des Prozesses durch die Schnittstelle der mobilen Vorrichtung und des Warnens, wenn in dem Schritt des Vergleichens des Selfies mit dem Foto des Identifikationsdokuments des Benutzers bestimmt wird, dass die Person in dem Selfie nicht dieselbe Person wie die Person in dem Identifikationsdokument ist.

4. Verfahren nach Anspruch 1, ferner **gekennzeichnet durch** den Schritt des Abbrechens des Prozesses durch die Schnittstelle der mobilen Vorrichtung, wenn die Informationen mit der Ausstellerinstitution des Identifikationsdokuments nicht korrekt sind, und ansonsten Anweisen des Unterzeichners, mit der handschriftlichen Signatur fortzufahren.

5. System zum Erzeugen einer digitalen handschriftlichen Signatur, DHS, umfassend eine mobile Vorrichtung; einen Identifikationsdokument-Ausstellerinstitutions-Server; einen Backend-DHS-Server; und einen dritten Server, der ein Aufbewahrungszertifikat ausstellt; **dadurch gekennzeichnet, dass** die mobile Vorrichtung mittels einer Schnittstelle konfiguriert ist zum:
Benachrichtigen eines Benutzers, dass es ein Dokument gibt, in das bei Annahme eine digitale handschriftliche Signatur aufgenommen werden soll;
Scannen eines Identifikationsdokuments des Benutzers, der signieren soll;
Bestimmen, ob Informationen des gescannten Identifikationsdokuments korrekt sind;
Erhalten eines Fingerabdrucks des Benutzers, der signieren soll;
Nehmen eines Selfies des Benutzers, der signieren soll, als Lebensbeweis;
Vergleichen des Selfies mit einem Foto des Identifikationsdokuments des Benutzers, der signieren soll, um zu verifizieren, dass das Selfie und das Identifikationsdokument derselben Person entsprechen, um zu verhindern, dass eine dritte Person im Namen des Benutzers signiert;
Senden der Informationen des gescannten Identifikationsdokuments und des Fingerabdrucks an einen Server einer Ausstellerinstitution des Identifikationsdokuments,
Erhalten des zu signierenden Dokuments und Aktivieren eines Werkzeugs, um die Signatur der handschriftlichen Signatur des Benutzers auf dem Bildschirm der mobilen Vorrichtung videoaufzuzeichnen und das Lesen des Texts, mit dem sich der Benutzer verpflichtet, die Vereinbarung zu erfüllen, die erworben wird, videoaufzuzeichnen;
Anzeigen der handschriftlichen Signatur sowie einer Videoaufzeichnung der Signatur und des Lesens auf dem Bildschirm der mobilen Vorrichtung;
Erzeugen verschlüsselter Dateien, die Informationen über das signierte Dokument enthalten, und Senden der Informationen an einen DHS-Backend-Server;
wobei der Backend-DHS-Server konfiguriert ist zum:
Vergleichen der Informationen, die in den verschlüsselten Dateien enthalten sind, mit den Informationen in dem Identifikationsdokument des Benutzers;
Vergleichen unter Verwendung von Gesichtsbiometrie, wenn der Benutzer und ein Foto des Identifikationsdokuments derselben Person entsprechen;
Erzeugen eines verbundenen Hashs der verschlüsselten Dateien und Umwandeln des Hashs in einen ASN.1-Standard, um ihn an einen dritten Server zu senden, um einen Zertifizierungsnachweis zu erhalten, wobei der dritte Server eine Kopie des Zertifizierungsnachweises in einer Datenbank speichert;
Erzeugen einer Datei mit einem eindeutigen Namen mit der DHS-Erweiterung und später, basierend auf der Datei mit der .DHS-Erweiterung, einer Datei mit der .PDF-Erweiterung, wobei die .DHS-Datei verschlüsselt ist und die .PDF-Datei mit einem Sicherheitscode geschützt ist;
Senden der . DHS- und .PDF-Dateien an eine Ausstellerinstitution davon und an den Benutzer.

6. System nach Anspruch 1, ferner **dadurch gekennzeichnet, dass** die mobile Vorrichtung mittels der Schnittstelle den Prozess abbricht, wenn der Benutzer nach dem Benachrichtigen des Benutzers über das Dokument, in das die handschriftliche Signatur aufgenommen werden soll, dreimal versagt, wenn er versucht, sich anzumelden.

7. System nach Anspruch 1, ferner **dadurch gekennzeichnet, dass** die mobile Vorrichtung mittels der Schnittstelle den Prozess abbricht und warnt, wenn in dem Schritt des Vergleichens des Selfies mit dem Foto des Identifikationsdokuments des Benutzers bestimmt wird, dass die Person in dem Selfie nicht dieselbe Person wie die Person in dem Identifikationsdokument ist.

8. System nach Anspruch 1, ferner **dadurch gekennzeichnet, dass** die mobile Vorrichtung mittels der Schnittstelle den Prozess abbricht, wenn die Informationen mit der Ausstellerinstitution des Identifikationsdokuments nicht korrekt sind, und ansonsten den Unterzeichner anweist, mit der handschriftlichen Signatur fortzufahren.

9. Computerlesbares Medium, das ein Verfahren zum Erzeugen einer digitalen handschriftlichen Signatur, DHS, enthält, das in einem System durchgeführt wird, **gekennzeichnet durch** das Durchführen der folgenden Schritte:
Benachrichtigen eines Benutzers, dass es ein Dokument gibt, in das bei Annahme eine digitale handschriftliche Signatur aufgenommen werden soll;
Scannen eines Identifikationsdokuments des Benutzers, der signieren soll;
Bestimmen, ob Informationen des gescannten Identifikationsdokuments korrekt sind;
Erhalten eines Fingerabdrucks des Benutzers, der signieren soll, mittels der Schnittstelle der mobilen Vorrichtung;
Nehmen eines Selfies des Benutzers, der signieren soll, als Lebensbeweis;
Vergleichen des Selfies mit einem Foto des Identifikationsdokuments des Benutzers, der signieren soll, um zu verifizieren, dass das Selfie und das Identifikationsdokument derselben Person entsprechen, um zu verhindern, dass eine dritte Person im Namen des Benutzers signiert;
Senden der Informationen des gescannten Identifikationsdokuments und des Fingerabdrucks an einen Server einer Ausstellerinstitution des Identifikationsdokuments;
Erhalten des zu signierenden Dokuments und Aktivieren eines Werkzeugs, um die Signatur der handschriftlichen Signatur des Benutzers auf dem Bildschirm der mobilen Vorrichtung videoaufzuzeichnen und das Lesen des Texts, mit dem sich der Benutzer verpflichtet, die Vereinbarung zu erfüllen, die erworben wird, videoaufzuzeichnen;
Anzeigen der handschriftlichen Signatur sowie einer Videoaufzeichnung der Signatur und des Lesens auf dem Bildschirm der mobilen Vorrichtung;
Erzeugen verschlüsselter Dateien, die Informationen über das signierte Dokument enthalten, und Senden der Informationen an einen DHS-Backend-Server;
Vergleichen der Informationen über das signierte Dokument, die in den verschlüsselten Dateien enthalten sind, mit den Informationen in dem Identifikationsdokument des Benutzers;
Vergleichen unter Verwendung von Gesichtsbiometrie, wenn der Benutzer und ein Foto des Identifikationsdokuments derselben Person entsprechen;
Erzeugen eines verbundenen Hashs der verschlüsselten Dateien und Umwandeln des Hashs in einen ASN.1-Standard, um ihn an einen dritten Server zu senden, um einen Zertifizierungsnachweis zu erhalten, wobei der dritte Server eine Kopie des Zertifizierungsnachweises in einer Datenbank speichert;
Erzeugen einer Datei mit einem eindeutigen Namen mit der .DHS-Erweiterung und später, basierend auf der Datei mit der .DHS-Erweiterung, einer Datei mit der .PDF-Erweiterung, wobei die .DHS-Datei verschlüsselt ist und die .PDF-Datei mit einem Sicherheitscode geschützt ist;
Senden der DHS- und .PDF-Dateien an eine Ausstellerinstitution davon und an den Benutzer.

## Revendications

1. Procédé destiné à être utilisé dans un système pour générer une signature manuscrite numérique, DHS, dans lequel le procédé comprend l'exécution des étapes suivantes :
la notification à un utilisateur, au moyen d'une interface d'un dispositif mobile, qu'il existe un document dans lequel, lors de l'acceptation, une signature manuscrite numérique doit être incorporée ;
le balayage, au moyen de l'interface du dispositif mobile, d'un document d'identification de l'utilisateur qui doit signer ;
la détermination, au moyen de l'interface du dispositif mobile, si des informations du document d'identification balayé sont correctes ;
l'obtention, au moyen de l'interface du dispositif mobile, d'une empreinte digitale de l'utilisateur qui doit signer ;
la prise, au moyen de l'interface du dispositif mobile, d'un selfie de l'utilisateur qui doit signer comme preuve de vie ;
la comparaison, au moyen de l'interface du dispositif mobile, du selfie avec une photographie du document d'identification de l'utilisateur qui doit signer, pour vérifier que le selfie et le document d'identification correspondent à la même personne et pour empêcher une tierce personne de signer pour le compte de l'utilisateur ;
l'envoi, au moyen du dispositif mobile, à un serveur d'une institution émettrice du document d'identification, des informations du document d'identification balayé et de l'empreinte digitale pour valider les informations fournies par l'utilisateur ;
l'obtention, au moyen de l'interface du dispositif mobile, du document à signer, et l'activation d'un outil pour vidéoenregistrer la signature de la signature manuscrite de l'utilisateur sur l'écran du dispositif mobile et vidéoenregistrer la lecture du texte avec lequel l'utilisateur s'engage à respecter l'accord qui est acquis ;
l'affichage, au moyen de l'interface du dispositif mobile, de la signature manuscrite et d'un enregistrement vidéo de ladite signature et de ladite lecture sur l'écran du dispositif mobile ;
la création, par l'interface du dispositif mobile, de fichiers cryptés contenant des informations sur le document signé et l'envoi desdites informations à un serveur dorsal DHS ;
la comparaison, au moyen du serveur dorsal DHS, d'informations sur le document signé contenues dans les fichiers cryptés avec les informations du document d'identification de l'utilisateur ;
la comparaison, au moyen du serveur dorsal DHS, en utilisant la biométrie faciale, si l'utilisateur et une photographie du document d'identification correspondent à la même personne ;
la création, au moyen du serveur dorsal DHS, d'un hachage joint des fichiers cryptés et la conversion dudit hachage en une norme ASN.1 et l'envoi à un troisième serveur pour obtenir une preuve de certification, dans lequel le troisième serveur stocke une copie de la preuve de certification dans une base de données ;
la création, au moyen du serveur dorsal DHS, d'un fichier avec un nom unique d'extension DHS et plus tard, sur la base du fichier avec l'extension DHS, d'un fichier avec une extension .PDF, dans lequel le fichier DHS est crypté et le fichier .PDF est protégé avec un code de sécurité ;
l'envoi des fichiers DHS et .PDF en utilisant le serveur dorsal DHS à une institution émettrice de celui-ci et à l'utilisateur.

2. Procédé selon la revendication 1, **caractérisé en outre par** l'étape d'annulation du processus par l'interface du dispositif mobile, lorsque, après la notification à l'utilisateur du document dans lequel la signature manuscrite doit être incorporée, l'utilisateur échoue trois fois lorsqu'il tente de se connecter.

3. Procédé selon la revendication 1, **caractérisé en outre par** l'étape d'annulation du processus par l'interface du dispositif mobile et d'avertissement, lorsque dans l'étape de comparaison du selfie avec la photographie du document d'identification de l'utilisateur, il est déterminé que la personne dans le selfie n'est pas la même personne que la personne dans le document d'identification.

4. Procédé selon la revendication 1, **caractérisé en outre par** l'étape d'annulation du processus par l'interface du dispositif mobile, lorsque les informations avec l'institution émettrice du document d'identification ne sont pas correctes, et sinon de conseiller au signataire de procéder à la signature manuscrite.

5. Système pour générer une signature manuscrite numérique, DHS, comprenant un dispositif mobile ; un serveur d'institution émettrice de document d'identification ; un serveur dorsal DHS ; et un troisième serveur émettant un certificat de conservation ; **caractérisé en ce que** le dispositif mobile est configuré au moyen d'une interface pour :
notifier à un utilisateur qu'il existe un document dans lequel, lors de l'acceptation, une signature manuscrite numérique doit être incorporée ;
balayer un document d'identification de l'utilisateur qui doit signer ;
déterminer si des informations du document d'identification balayé sont correctes ;
obtenir une empreinte digitale de l'utilisateur qui doit signer ;
prendre un selfie de l'utilisateur qui doit signer comme preuve de vie ;
comparer le selfie avec une photographie du document d'identification de l'utilisateur qui doit signer pour vérifier que le selfie et le document d'identification correspondent à la même personne pour empêcher une tierce personne de signer pour le compte de l'utilisateur ;
envoyer à un serveur d'une institution émettrice du document d'identification, les informations du document d'identification balayé et l'empreinte digitale,
obtenir le document à signer, et activer un outil pour vidéoenregistrer la signature de la signature manuscrite de l'utilisateur sur l'écran du dispositif mobile et pour vidéoenregistrer la lecture du texte avec lequel l'utilisateur s'engage à respecter l'accord qui est acquis ;
afficher la signature manuscrite, ainsi qu'un enregistrement vidéo de ladite signature et de ladite lecture sur l'écran du dispositif mobile ;
créer des fichiers cryptés contenant des informations sur le document signé et envoyer lesdites informations à un serveur dorsal DHS ;
dans lequel le serveur dorsal DHS est configuré pour :
comparer les informations contenues dans les fichiers cryptés avec les informations dans le document d'identification de l'utilisateur ;
comparer, en utilisant la biométrie faciale, si l'utilisateur et une photographie du document d'identification correspondent à la même personne ;
créer un hachage joint des fichiers cryptés et convertir ledit hachage en une norme ASN.1 pour l'envoyer à un troisième serveur pour obtenir une preuve de certification, dans lequel le troisième serveur stocke une copie de la preuve de certification dans une base de données ;
créer un fichier avec un nom unique avec extension DHS . et plus tard, sur la base du fichier avec extension .DHS, un fichier avec extension .PDF, dans lequel le fichier .DHS est crypté et le fichier .PDF est protégé avec un code de sécurité ;
envoyer le. fichiers DHS et .PDF à une institution émettrice de celui-ci et à l'utilisateur.

6. Système selon la revendication 1, **caractérisé en outre en ce que** le dispositif mobile, au moyen de l'interface, annule le processus, lorsque, après la notification à l'utilisateur du document dans lequel la signature manuscrite doit être incorporée, l'utilisateur échoue trois fois lorsqu'il tente de se connecter.

7. Système selon la revendication 1, **caractérisé en outre en ce que** le dispositif mobile, au moyen de l'interface, annule le processus et avertit lorsque, dans l'étape de comparaison du selfie avec la photographie du document d'identification de l'utilisateur, il est déterminé que la personne dans le selfie n'est pas la même personne que la personne dans le document d'identification.

8. Système selon la revendication 1, **caractérisé en outre en ce que** le dispositif mobile, au moyen de l'interface, annule le processus, lorsque les informations avec l'institution émettrice du document d'identification ne sont pas correctes, et sinon conseille au signataire de procéder à la signature manuscrite.

9. Support lisible par ordinateur contenant un procédé pour générer une signature manuscrite numérique, DHS, qui est exécuté dans un système, **caractérisé par** l'exécution des étapes suivantes :
la notification à un utilisateur qu'il existe un document dans lequel, lors de l'acceptation, une signature manuscrite numérique doit être incorporée ;
le balayage d'un document d'identification de l'utilisateur qui doit signer ;
la détermination si des informations du document d'identification balayé sont correctes ;
l'obtention, par l'interface du dispositif mobile, d'une empreinte digitale de l'utilisateur qui doit signer ;
la prise d'un selfie de l'utilisateur qui doit signer comme preuve de vie ;
la comparaison du selfie avec une photographie du document d'identification de l'utilisateur qui doit signer pour vérifier que le selfie et le document d'identification correspondent à la même personne pour empêcher une tierce personne de signer pour le compte de l'utilisateur ;
l'envoi à un serveur d'une institution émettrice du document d'identification, des informations du document d'identification balayé et de l'empreinte digitale ;
l'obtention du document à signer, et l'activation d'un outil pour vidéoenregistrer la signature de la signature manuscrite de l'utilisateur sur l'écran du dispositif mobile et pour vidéoenregistrer la lecture du texte avec lequel l'utilisateur s'engage à respecter l'accord qui est acquis ;
l'affichage de la signature manuscrite ainsi qu'un enregistrement vidéo de ladite signature et de ladite lecture sur l'écran du dispositif mobile ;
la création de fichiers cryptés contenant des informations sur le document signé et l'envoi desdites informations à un serveur dorsal DHS ;
la comparaison des informations sur le document signé contenues dans les fichiers cryptés avec les informations dans le document d'identification de l'utilisateur ;
la comparaison, en utilisant la biométrie faciale, si l'utilisateur et une photographie du document d'identification correspondent à la même personne ;
la création d'un hachage joint des fichiers cryptés et la conversion dudit hachage en une norme ASN.1 pour l'envoyer à un troisième serveur pour obtenir une preuve de certification, dans lequel le troisième serveur stocke une copie de la preuve de certification dans une base de données ;
la création d'un fichier avec un nom unique avec extension .DHS et plus tard, sur la base du fichier avec extension .DHS, un fichier avec extension .PDF , dans lequel le fichier .DHS est crypté et le fichier .PDF est protégé avec un code de sécurité ;
l'envoi des fichiers DHS et .PDF à une institution émettrice de celui-ci et à l'utilisateur.
